Europäisches Patentamt

European Patent Office

Office européen des brevets

(19)

(11) EP 1 134 866 A1

(12) EUROPÄISCHE PATENTANMELDUNG

(43) Veröffentlichungstag:
19.09.2001 Patentblatt 2001/38

(51) Int Cl.⁷: **H02H 7/00**, H02M 1/00

(21) Anmeldenummer: 00105745.4

(22) Anmeldetag: 17.03.2000

| (84) Benannte Vertragsstaaten:<br>**AT BE CH CY DE DK ES FI FR GB GR IE IT LI LU**<br>**MC NL PT SE**<br>Benannte Erstreckungsstaaten:<br>**AL LT LV MK RO SI** | (71) Anmelder: **SIEMENS AKTIENGESELLSCHAFT**<br>**80333 München (DE)**<br><br>(72) Erfinder: **Johanning, Hans-Peter**<br>**97299 Zell (DE)** |
|---|---|

(54) **Verfahren und Vorrichtung zum Steuern eines Wandlers**

(57)     Zum Steuern eines Wandlers (1), der eine primärseitige Eingangsspannung ($U_E$) in eine sekundärseitige Ausgangsspannung ($U_a$) umwandelt, wird ein aus einer sekundärseitig erfassten Ist-Spannung ($U_{ist}$) abgeleiteter Spannungswert ($U_V$) mit einem Referenzwert ($U_R$) verglichen und bei Überschreiten des Referenzwertes ein Steuersignal ($S_a$) als Auslösekriterium zum Abschalten des Wandlers (1) erzeugt. Dabei wird während einer Prüfphase der Spannungswert ($U_V$) oder der Referenzwert ($U_R$) derart manipuliert, dass das Auslösekriterium erfüllt ist.

Fig. 1

EP 1 134 866 A1

**Beschreibung**

Die Erfindung bezieht sich auf ein Verfahren zum Steuern eines Wandlers, der eine primärseitige Eingangspannung in eine sekundärseitige Ausgangsspannung umwandelt. Sie bezieht sich weiter auf eine Vorrichtung zur Durchführung des Verfahrens. Unter Wandler wird hierbei insbesondere ein Gleichstrom-Gleichstrom-Wandler (DC/DC-Wandler) verstanden.

Ein derartiger Wandler wird häufig in einem sogenannten Mehrspannungsnetz eingesetzt, um eine bezogen auf den Wandler primärseitige Eingangsspannung in eine vergleichsweise hohe oder niedrige sekundärseitige Ausgangsspannung umzuwandeln. Ein solches Mehrspannungssystem findet sich daher häufig in einem Kraftfahrzeug als elektrisches Leistungsversorgungssystem, das zusätzlich zu den in der Regel auf eine Gleichspannung von 12V eingestellten Niederspannungslasten auch mit zumindest einer z.B. auf 42V eingestellten Hochleistungslast arbeitet. Dazu umfasst das System im Kraftfahrzeugbereich einen entsprechenden Hochleistungsgenerator und/oder eine entsprechende Hochleistungs-Batterie sowie einen DC/DC-Wandler, der die Gleichspannung von z.B. 42V bei zumindest annähernd gleicher Leistung in eine 12V-Spannung umwandelt. Zusätzlich umfasst das Mehrspannungsnetz eines Kraftfahrzeugs üblicherweise auch eine Niederspannungs-Batterie, d.h. z.B. eine 12V-Batterie.

Innerhalb des elektrischen Leistungsversorgungssystems eines Kraftfahrzeugs ist dem dort üblichen DC/DC-Wandler eine Regelung oder Steuerung zugeordnet, die die sekundärseitige Ausgangsspannung des Wandlers in Richtung auf einen vorgegebenen Sollwert einstellt. Ein Regel- bzw. Steuereingriff ist insbesondere dann erforderlich, wenn die Ausgangsspannung infolge einer Leistungsentnahme einer sekundärseitigen Last, insbesondere unter einen vorgebbaren Schwellwert, absinkt. Bei sekundärseitigem Anschluss einer Niederspannungsbatterie an den Wandler, wird dieser eingeschaltet und die Batterie nachgeladen, wenn sich diese aufgrund einer angeschlossenen Niederspannungslast unter den Schwellwert entladen hat. Ein derartiges elektrisches Leistungsversorgungssystem für ein Kraftfahrzeug mit einer lediglich bedarfsweisen Aktivierung oder Einschaltung eines DC/DC-Wandlers ist aus der DE 43 10 240 A1 bekannt.

Eine derartige Steuerung eines Wandlers mit sekundärseitig angeschlossener Batterie kann bei einer Fehlfunktion einen unkontrollierten Zustand hervorrufen. So kann beispielsweise durch chemische Prozesse in der sekundärseitigen Batterie ein Knallgasgemisch entstehen, wenn über einen entsprechend langen Zeitraum die sekundärseitig einzustellende Ausgangsspannung einen Maximalwert überschreitet.

Der Erfindung liegt daher die Aufgabe zugrunde, ein Verfahren zum Steuern eines Wandlers anzugeben, bei dem durch eine Überwachung des geregelten oder gesteuerten Wandlers Fehlfunktionen zuverlässig vermieden sind. Insbesondere soll dabei auch die Funktionsfähigkeit der Überwachung selbst überprüfbar sein. Des Weiteren soll eine zur Durchführung des Verfahrens besonders geeignete Vorrichtung angegeben werden.

Bezüglich des Verfahrens wird die Aufgabe erfindungsgemäß gelöst durch die Merkmale des Anspruchs 1. Dazu erfolgt einerseits eine Schwellwertüberwachung anhand eines Vergleichs einer sekundärseitig erfassten Ist-Spannung mit einer Referenzspannung, die im Wesentlichen eine vorgebbare maximale Ausgangsspannung repräsentiert. Andererseits wird die Schwellwertüberwachung selbst hinsichtlich deren Funktionsfähigkeit zyklisch oder in vorgebbaren Testintervallen geprüft, indem während einer Prüfphase entweder der Referenzwert oder ein aus der sekundärseitig erfassten Ist-Spannung abgeleiteter Spannungswert derart herunter- bzw. heraufgesetzt wird, dass der Wandler abgeschaltet wird.

Durch eine derartige Schwellwertmanipulation wird somit das Auslösekriterium zum Abschalten des Wandlers erzwungen. Durch eine Plausibilitätsprüfung der Reaktion des Wandlers auf das Auslösekriterium kann einerseits die Funktionsfähigkeit der Schwellwertüberwachung geprüft werden, indem der aktuelle Schaltzustand des Wandlers abgefragt wird. Dazu wird vorzugsweise die sekundärseitig erfasste Ist-Spannung und/oder ein sekundärseitig erfasster Ist-Strom herangezogen. Erfüllt ein dabei erfasster Wert eine vorgebbare Plausibilitätsaussage, so wird von einer fehlerfreien Funktion der Schwellwertüberwachung ausgegangen und die Prüfphase beendet. Andernfalls erfolgt eine Fehlermeldung. Auf diese Weise kann sowohl die Funktionsfähigkeit des Wandlers als auch die Funktionsfähigkeit der Schwellwertüberwachung selbst geprüft werden.

Um sicherzustellen, dass während der Prüfphase, d.h. insbesondere beim Start eines entsprechenden Prüfprogramms oder Testalgorithmus, der Wandler einen definierten Schaltzustand aufweist, wird in vorteilhafter Weiterbildung zunächst ein Testsignal zum Einschalten des Wandlers erzeugt. Das Testsignal kann dabei sowohl in Abhängigkeit vom aktuellen Schaltzustand des Wandlers als auch unabhängig davon erzeugt werden.

Da im Rahmen der Schwellwertüberwachung die Ist-Spannung kontinuierlich oder auch zeitdiskret mit dem Referenzwert verglichen wird und somit auch während der Prüfphase eine entsprechende Plausibilitätsaussage über ein Unter- oder Überschreiten des Referenzwertes vorliegt, kann bereits zu Beginn der Prüfphase mit der entsprechenden Plausibilitätsabfrage und bei aktiviertem Testsignal eine Aussage abgeleitet werden, ob eine fehlerfreie Prüfung der Schwellwertüberwachung möglich ist. Der Schwellwertüberwachung liegt die Ist-Spannung vorzugsweise in Form des aus dieser durch Teilung abgeleiteten Spannungswertes vor, während der Referenzwert zweckmäßigerweise eine maximal zulässige Ausgangsspannung repräsentiert.

In einer besonders einfachen Ausführung der Wandler-Steuerung oder -Regelung wird die Ausgangsspannung durch einen Spannungsregler eingestellt, der bei einer Abweichung der erfassten Ist-Spannung von einer vorgegebenen Soll-Spannung eine Stellgröße für den Wandler erzeugt. In vorteilhafter Ausgestaltung liefert der Spannungsregler ausgangsseitig jedoch nicht direkt die Stellgröße für den Wandler, sondern einen Soll-Strom oder ein Stromsollwertsignal, der bzw. das seinerseits einen der Spannungsregelung unterlagerten Stromregelkreis ansteuert. Dieser wiederum vergleicht das vom Spannungsregler erzeugte Stromsollwertsignal mit dem sekundärseitig erfassten Ist-Strom und generiert bei einer Abweichung die entsprechende Stellgröße für den Wandler. Die Steuerung des Wandlers erfolgt somit nach Art einer Kaskadenregelung, die sich durch eine besonders hohe Regeldynamik und Regelstabilität auszeichnet.

Bezüglich der Vorrichtung wird die Aufgabe erfindungsgemäß gelöst durch die Merkmale des Anspruchs 8. Vorteilhafte Ausgestaltungen sind Gegenstand der auf diesen rückbezogenen Unteransprüche.

Die Vorrichtung umfasst zusätzlich zu einem ersten Regler oder Spannungsregler zur Einstellung der Ausgangsspannung einerseits eine ausgangsseitig mit dem Wandler verbundene Sicherheits- oder Schalteinrichtung zur Schwellwertüberwachung. Diese erzeugt ein Steuersignal zum Abschalten des Wandlers, wenn die mittels eines Spannungsmessers sekundärseitig erfasste Ist-Spannung den Referenzwert überschreitet. Andererseits umfasst die Vorrichtung einen Schwellwertmanipulator, der ausgangsseitig mit einem Eingang der Schalteinrichtung verbunden ist. Der Schwellwertmanipulator setzt während der z.B. zyklisch eingeleiteten Prüfphase den Spannungswert herauf oder den Referenzwert herunter. Dabei ist das Maß oder der Wert der rechnerisch ermittelten Schwellwertveränderung derart bemessen, dass das Auslösekriterium erfüllt ist.

Das Maß der Schwellwertmanipulation wird dabei vorteilhafterweise aus dem im Rahmen der Regelung oder Steuerung des Wandlers bereits vorhandenen Parametern ermittelt. Dabei wird zweckmäßigerweise der Spannungswert oder der Referenzwert mit einem Faktor multipliziert, der seinerseits durch Quotientenbildung des Spannungswertes bzw. des Referenzwertes bestimmt wird. Der der Schalteinrichtung eingangsseitig zugeführte manipulierte Schwellwert ist zweckmäßigerweise zum Ausgleich von Meß- und/oder Berechnungstoleranzen um einen Toleranzwert korrigiert.

Zur Erzeugung des Testsignals, das insbesondere die Einschaltung des Wandlers während der Prüfphase und noch vor Einleitung der Schwellwertmanipulation sicherstellen soll, ist ein Steuermodul vorgesehen, das in einem auch die Steuerung des Wandlers durchführenden Kontroller oder Microprozessor hard- und softwaremäßig realisiert sein kann. Das Steuermodul weist einen ersten Steuereingang für die sekundärseitig erfasste Ist-Spannung und einen zweiten Steuereingang für den sekundärseitig erfassten Ist-Strom auf. Ein Steuerausgang ist mit einem Schalter oder einem programmtechnisch realisierten Schaltelement verbunden, der bzw. das das an einem Signalausgang des Steuermoduls anstehende Testsignal einem Steuereingang des Wandlers aufschaltet.

Das Steuermodul dient zweckmäßigerweise sowohl zum Starten als auch zum Beenden der Prüfphase. Dazu ist in dem Steuermodul ein Algorithmus hinterlegt, der zum Start der Prüfphase einerseits das Testsignal generiert und dieses dem Wandler aufschaltet, und der andererseits die Schwellwertmanipulation aktiviert. Zum Beenden der Prüfphase wird mittels des in dem Steuermodul hinterlegten oder diese repräsentierenden Algorithmus einerseits die Schwellwertmanipulation aufgehoben und andererseits das Testsignal abgeschaltet. Mit der Abschaltung des Testsignals wird die vom ersten bzw. zweiten Regler erzeugte Steuergröße dem Wandler aufgeschaltet. Die Abschaltung der Schwellwertmanipulation erfolgt durch Aufschalten des unveränderten Spannungswertes bzw. Referenzwertes auf die ausgangsseitig mit einem Schalteingang des Wandlers verbundene Schalteinrichtung zur Schwellwertüberwachung.

Die mit der Erfindung erzielten Vorteile bestehen insbesondere darin, dass einerseits durch eine Schwellwertüberwachung eines gesteuerten oder geregelten Wandlers infolge von Fehlfunktionen unerwünschte Zustände in Form beispielsweise eines überhöhten Spannungswertes zuverlässig vermieden werden. Andererseits kann durch eine zyklisch oder in vorgebbaren Zeitabständen eingeleitete Prüfphase die Schwellwertüberwachung selbst hinsichtlich deren Funktionsfähigkeit geprüft werden, so dass auch "schlafende Fehler" zuverlässig erkannt werden. Dadurch ist gewährleistet, dass die Schwellwertüberwachung, die eine Sicherheitseinrichtung für die Steuerung des Wandlers und des Wandlers selbst darstellt, diesen im Bedarfsfall zuverlässig abschaltet.

Das Verfahren und die Vorrichtung eignet sich besonders zum Steuern eines DC/DC-Wandlers. Sie eignen sich jedoch analog auch in Verbindung mit einem Wechselstrom-Gleichstrom-Wandler (AC/DC-Wandler), einem Gleichstrom-Wechselstrom-Wandler (DC/AC-Wandler) oder einem Wechselstrom-Wechselstrom-Wandler (AC/AC-Wandler). Dabei kann die Richtung der Leistungsübertragung unterschiedlich sein, wobei unter Primärseite diejenige Seite des jeweiligen Wandlers verstanden wird, auf der die Leistungseinspeisung erfolgt, während dann die Sekundärseite diejenige Seite des Wandlers ist, auf die die Leistung übertragen wird.

Nachfolgend werden Ausführungsbeispiele der Erfindung anhand einer Zeichnung näher erläutert.

Darin zeigen:

FIG 1 schematisch eine Sicherheitsvorrichtung zum Steuern eines DC/DC-Wandlers, und

FIG 2 ein Flussdiagramm zur Prüfung der Funktionssicherheit der Sicherheitsvorrichtung.

Einander entsprechende Teile sind in beiden Figuren mit den gleichen Bezugszeichen versehen.

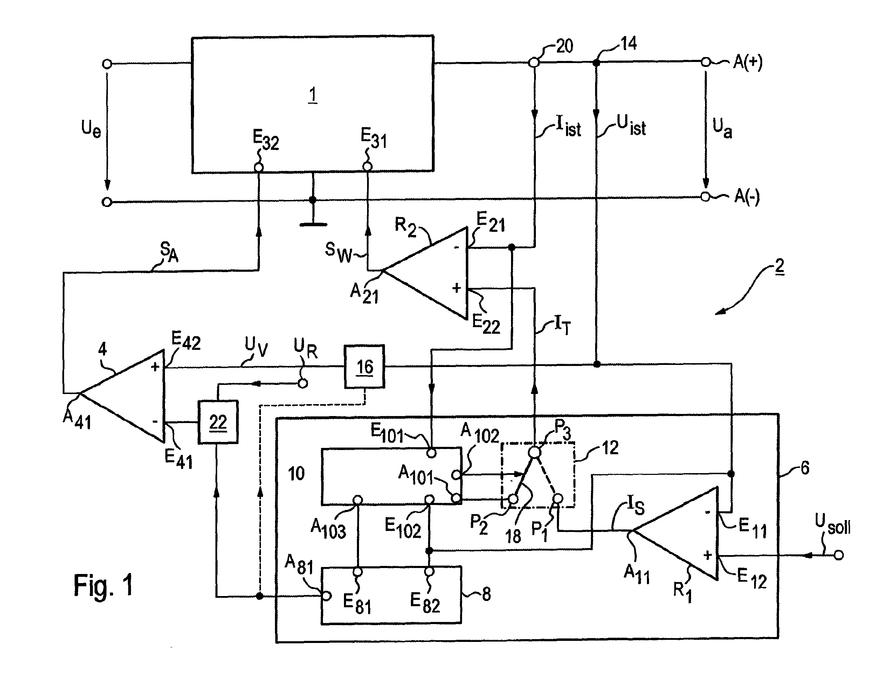

FIG 1 zeigt einen DC/DC-Wandler 1, der eine Eingangsspannung $U_e$ in eine Ausgangsspannung $U_a$ umwandelt. Die Eingangsspannung $U_e$ ist in nicht näher dargestellter Art und Weise beispielsweise eine in einem elektrischen Mehrspannungsnetz eines Kraftfahrzeugs von einem Generator oder von einer Hochleistungs-Batterie erzeugte Spannung von z.B. 42V. In das Spannungsnetz des Kraftfahrzeugs kann generatorseitig auch ein sogenannter Starter-Generator eingebunden sein.

Die bezogen auf den nachfolgend als Wandler bezeichneten DC/DC-Wandler 1 aus der sekundärseitigen Eingangsspannung $U_e$ bei zumindest annähernd gleicher Leistung durch Umwandlung erzeugte sekundärseitige Ausgangsspannung $U_a$ ist in dieser Anwendung innerhalb eines elektrischen Leistungsversorgungssystems eines Kraftfahrzeugs eine vergleichsweise niedrige Gleichspannung, die beispielsweise einer 12V-Batteriespannung einer Niedervolt-Batterie entspricht. In dieser Anwendung können ein Ausgangsanschluss A(+) des Wandlers 1 an einen Pluspol und ein mit Masse verbundener Ausgangsanschluss A(-) an einen Minuspol der von der sekundärseitigen Ausgangsspannung $U_a$ versorgten Niedervolt-Batterie angeschlossen sein.

Dem Wandler 1 ist eine Steuervorrichtung 2 zugeordnet, die einen ersten Regler oder Spannungsregler $R_1$ und einen zweiten Regler oder Stromregler $R_2$ sowie eine hier als Komparator ausgeführte Schwellwertüberwachung 4 und einen Kontroller 6 in Form vorzugsweise eines Mikroprozessors umfasst. Der Kontroller 6 wiederum umfasst einen Schwellwertmanipulator 8 und ein mit diesem verbundenes Steuermodul 10 sowie ein Schaltelement 12. Im Ausführungsbeispiel ist der Spannungsregler R1 Teil des Kontrollers 6.

Ein der Steuervorrichtung 2 zugeordneter Spannungsmesser 14 erfasst die vom Wandler 1 sekundärseitig erzeugte Ist-Spannung $U_{ist}$. Diese wird einerseits sowohl einem Reglereingang $E_{11}$ als auch dem Schwellwertmanipulator 8 und dem Steuermodul 10 sowie andererseits einem Signaleingang $E_{42}$ der Schwellwertüberwachung 4 über ein Teilungs- und Schaltglied 16 zugeführt. Dem Spannungsregler $R_1$ wird über einen zweiten Reglereingang $E_{12}$ eine Sollspannung $U_{soll}$ zugeführt. Ein Steuerausgang $A_{11}$ des Spannungsreglers $R_1$ ist an einen ersten Schaltanschluss $P_1$ des Schaltelements 12 geführt. Ein zweiter Schaltanschluss $P_2$ des Schaltelements 12 ist mit einem Signalausgang $A_{101}$ des Steuermoduls 10 verbunden. Ein Schalt- oder

Steuerausgang $A_{102}$ des Steuermoduls 10 wirkt auf ein Umschaltelement 18 des Schalters 12 zur Verbindung dessen dritten Schaltanschlusses $P_3$ mit dem Schaltanschluss $P_1$ oder $P_2$. Der Schaltanschluss $P_3$ ist mit einem Reglereingang $E_{22}$ des Stromreglers $R_2$ verbunden, dessen weiterer Regeleingang $E_{11}$ mit einem Strommesser 20 zur Erfassung des sekundärseitigen Ist-Stroms $I_{ist}$ des Wandlers 1 verbunden ist. Ein Reglerausgang $A_{21}$ des Stromreglers $R_2$ ist mit einem Steuereingang $E_{31}$ des Wandlers 1 verbunden.

Der Ist-Strom $I_{ist}$ wird außerdem einem Signaleingang $E_{101}$ des Steuermoduls 10 zugeführt. Die Ist-Spannung $U_{ist}$ wird dem Steuermodul 10 über einen Signaleingang $E_{102}$ zugeführt. Ein Steuerausgang $A_{103}$ des Steuermoduls 10 ist mit einem Steuereingang $E_{81}$ des Schwellwertmanipulators 8 verbunden, an dessen Signaleingang $E_{82}$ die Ist-Spannung $U_{ist}$ geführt ist. Ein Steuerausgang $A_{81}$ des Schwellwertmanipulators 8 ist an das Teilungs- und Umschaltglied 16 oder an ein entsprechendes Teilungs- oder Umschaltglied 22 geführt, dem ein eine maximale Spannung $U_{max}$ repräsentierender Referenzwert $U_R$ zugeführt ist. Das Teilungs- und Umschaltglied 22 ist seinerseits an einen Signaleingang $E_{41}$ der Schwellwertüberwachung 4 geführt. Deren Steuerausgang $A_{41}$ ist mit einem Schalt- oder Steuereingang $E_{32}$ des Wandlers 1 verbunden.

Bei eingeschaltetem Wandler 1 dient der Spannungsregler $R_1$ der Steuervorrichtung 2 zur Regelung der Ausgangsspannung $U_a$. Dazu führt der Spannungsregler $R_1$ die sekundärseitig erfasste Ist-Spannung $U_{ist}$ an die vorgegebene Sollspannung $U_{soll}$ heran. Dabei ist der Steuerausgang $A_1$ des Spannungsreglers $R_1$ über das Schaltelement 12 mit dem Reglereingang $E_{22}$ des Stromreglers $R_2$ verbunden. Dieser wiederum führt den sekundärseitig erfassten Ist-Strom $I_{ist}$ an einen vom Spannungsregler $R_1$ erzeugten und durch ein Stromsollwertsignal $I_s$ repräsentierten Soll-Strom heran und generiert dazu eine Stellgröße $S_W$ für den Wandler 1. Die Steuerung des Wandlers 1 erfolgt somit nicht direkt über den übergeordneten Spannungsregelkreis, sondern indirekt über den untergeordneten Stromregelkreis. Dadurch wird eine besonders hohe Regeldynamik und Regelstabilität einer durch den Spannungsregler $R_1$ und den Stromregler $R_2$ gebildeten Kaskadenregelung erreicht.

Unabhängig vom Schaltzustand des Wandlers 1 überwacht die durch den Komparator 4 repräsentierte Schwellwertüberwachung die Ist-Spannung $U_{ist}$ hinsichtlich einer Überschreitung des Referenzwertes $U_R$. Die Ist-Spannung $U_{ist}$ wird dabei zweckmäßigerweise über das Teilungsglied 16 um einen Faktor c heruntergeteilt, wobei $0 < c \leq 1$ ist. Der Schwellwertüberwachung 4 wird somit über dessen Signaleingang $E_{42}$ ein Spannungswert $U_V$ mit $U_V = c \cdot U_{ist}$ zugeführt. Der Referenzwert $U_R$ entspricht einer maximal zulässigen Ausgangsspannung $U_a$ mit $U_a = U_{max} = U_R$. Die Schwellwertüberwachung 4 vergleicht den Spannungswert $U_V$ mit dem Referenzwert $U_R$ und generiert bei Überschreiten des Referenzwertes $U_R$ ein Ausgangssignal $S_A$ als Auslösekriterium zum Abschalten des Wandlers 1, das diesem über dessen Signaleingang $E_{41}$ zugeführt wird. Das Auslösekriterium ist z.B. dann erfüllt, wenn die sekundärseitige Ausgangsspannung $U_a$ die Bedingung erfüllt:

$U_a = U_{ist} \geq U_{max}$, wobei $U_{max}$ z.B. 16V ist.

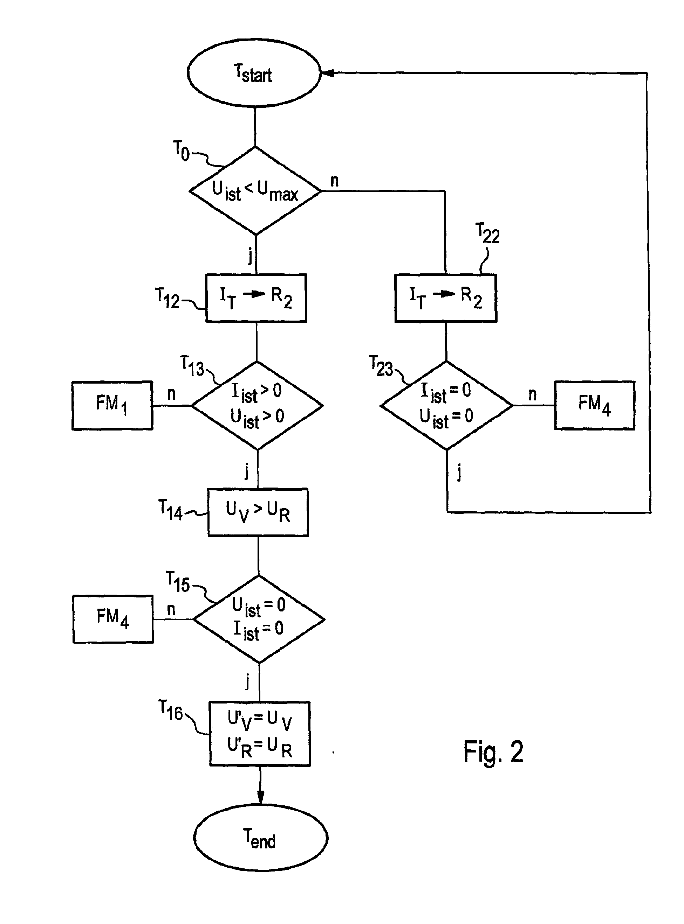

Um innerhalb der Steuereinrichtung 2 und insbesondere innerhalb der Schwellwertüberwachung 4 einen "schlafenden Fehler" erkennen zu können, wird zyklisch oder bei bzw. vor jedem Einschalten des Wandlers 1 eine Prüfphase in Form eines vorzugsweise softwaremäßig realisierten Testprogramms T durchlaufen, dessen einzelnen Programmschritte - beginnend mit einem Programmstart $T_{start}$ - in dem in FIG 2 gezeigten Flussdiagramm veranschaulicht sind.

Nach dem Programmstart $T_{start}$ vergleicht in einem ersten Programmschritt $T_0$ das Steuermodul 10 die diesem über den Signaleingang $E_{102}$ zugeführte Ist-Spannung $I_{ist}$ mit der auch im Steuermodul 10 hinterlegten maximal zulässigen Spannung $U_{max}$. Ist die Ist-Spannung $U_{ist}$ kleiner als die zulässige Maximalspannung $U_{max}$, so geht das Testprogramm zu einem Programmschritt $T_{12}$, andernfalls zu einem Programmschritt $T_{22}$. Bei beiden Programmschritten $T_{12}$ und $T_{22}$ wird mittels des Schaltmoduls 10 das Umschaltelement 18 des Schalters 12 auf den mit dem Signalausgang $A_{101}$ verbundenen Schaltanschluss $P_2$ umgeschaltet und ein vom Schaltmodul 10 erzeugtes Testsignal $I_T$ an den Reglereingang $E_{22}$ des Stromreglers $R_2$ geführt. Das Testsignal $I_T$ repräsentiert ein Stromsollwertsignal oder einen Soll-Strom, das bzw. der den Stromregler $R_2$ zum Einschalten des Wandlers 1 veranlasst. Das Testsignal $I_T$ wird auch dann erzeugt, wenn der Wandler 1 bereits eingeschaltet ist.

In einem an den Programmschritt $T_{22}$ anschießenden Programmschritt $T_{23}$ vergleicht das Steuermodul 10 des Kontrollers 6 den erfassten Ist-Strom $I_{ist}$ und/oder die erfasste Ist-Spannung $U_{ist}$ mit einem Plausibilitätskriterium, das im Ausführungsbeispiel Null ist. Ist das Kriterium $I_{ist} = 0$, wenn der Wandler 1 sekundärseitig an eine Batterie oder eine Last angeschlossen ist, oder das Kriterium $U_{ist} = 0$, wenn der Wandler 1 sekundärseitig nicht an eine Batterie oder an eine Last angeschlossen ist, nicht erfüllt, so erfolgt eine Fehlermeldung $FM_4$. Diese zeigt einen Defekt der durch die Schwellwertüberwachung 4 repräsentierten Sicherheitseinrichtung an. Andernfalls, d.h. bei Erfüllung dieses Plausibilitätskriteriums ist keine detaillierte Aussage möglich, so dass dieser Programmpfad des Testprogramms T zum Programmstart Tstart zurückgeht. Dabei ist von einer fehlerfreien Funktion der Sicherheitseinrichtung auszugehen, da entweder bei $U_{ist} \geq U_{max}$ der Wandler 1 nicht arbeitet oder defekt ist.

Im parallelen Programmpfad vergleicht das Steuermodul 10 des Kontrollers 6 in einem auf den Programmschritt $T_{12}$ folgenden Programmschritt $T_{13}$ die sekundärseitig erfasste Ist-Spannung $U_{ist}$ und/oder den sekundärseitig erfassten Ist-Strom $I_{ist}$ mit einem weiteren Plausibilitätskriterium. Dieses entspricht - wie in dem Flussdiagramm gemäß FIG 2 aufgeführt - demselben Plausibilitätskriterium, jedoch nach einer anderen Beziehung. Ist $I_{ist} > 0$, wenn sekundärseitig an den Wandler 1 eine Batterie oder ein Last angeschlossen ist, oder $U_{ist} > 0$, wenn keine Batterie bzw. keine Last angeschlossen ist, so geht das Testprogramm T zu einem Programmschritt $T_{14}$. Andernfalls wird eine Fehlermeldung $FM_1$ generiert, die einen Defekt des Wandlers 1 anzeigt.

Ist das im Programmschritt $T_{13}$ geprüfte Plausibilitätskriterium erfüllt, so erfolgt im Programmschritt $T_{14}$ eine Schwellwertmanipulation. Dazu wird vom Steuermodul 10 der Schwellwertmanipulator 8 aktiviert. Dieser führt über dessen Steuerausgang $A_{81}$ entweder an den Signaleingang $E_{42}$ des Komparators 4 einen heraufgesetzten Spannungswert $U'_V$ mit $U'_V > U_V$ oder an den Signaleingang $E_{41}$ des Komparators 4 einen herabgesetzten Referenzwert $U'_R$ mit $U'_R < U_R$. Die Schwellwertmanipulation mit einer Heraufsetzung des Spannungswertes $U_V$ erfolgt zweckmäßigerweise nach der Beziehung:

$$U'_V = U_V \cdot \frac{U_{max}}{U_{ist}} + \Delta x,$$

wobei $\Delta x$ ein vorgebbarer Toleranzwert ist. Analog erfolgt eine Schwellwertmanipulation durch Herabsetzen des Referenzwertes $U_R$ zweckmäßigerweise nach der Beziehung:

$$U'_R = U_R \cdot \frac{U_{ist}}{U_{max}} - \Delta x$$

Mit diesem Programmschritt $T_{14}$ erfolgt eine Zwangsabschaltung des Wandlers 1, da durch die Schwellwertmanipulation das Auslösekriterium zum Abschalten des Wandlers 1 erfüllt ist.

Nach einer einstellbaren Wartezeit t geht das Programm T zu einem Programmschritt $T_{15}$, in dem wiederum eine Plausibilitätsabfrage erfolgt. Die Wartezeit t wird zweckmäßigerweise derart eingestellt, dass das infolge der Schwellwertmanipulation vom Komparator 4 ausgangsseitig erzeugte Abschaltsignal $S_A$ am Steuereingang $E_{32}$ des Wandlers 1 anliegt und dieser als abgeschaltet anzusehen ist.

Im Programmschritt $t_{15}$ erfolgt wiederum die Plausibilitätsabfrage, ob die Ist-Spannung $U_{ist}$ das Kriterium $U_{ist} = 0$ und/oder ob der Ist-Strom $I_{ist}$ das Kriterium $I_{ist} = 0$ erfüllt. Ist dieses Plausibilitätskriterium erfüllt, so ist der Wandler 1 infolge des durch die Schwellwertmanipulation zwangsweise generierte Auslösekriteriums abgeschaltet und das Programm geht zu einem Programmschritt $T_{16}$. Andernfalls erfolgt eine Fehlermeldung $FM_4$, die einen Defekt der Schwellwertüberwachung 4 und damit der Sicherheitseinrichtung signalisiert.

In dem Programmschritt $T_{16}$ schaltet das Steuermodul 10 des Kontrollers 6 einerseits die Schwellwertmanipulation 8 ab und andererseits das Umschaltelement 18 des Schalters 12 vom Schaltanschluss $P_2$ auf den Schaltanschluss $P_1$ um. Dadurch wird die durch den Spannungsregler $R_1$ und den Stromregler $R_2$ repräsentierte Kaskadenregelung und damit die bestimmungsgemäße Steuerung des Wandlers 1 aktiviert. Die Abschaltung des Schwellwertmanipulators 8 erfolgt durch dessen Ansteuerung vom Steuermodul 10, so dass der Schwellwertmanipulator 8 den Signaleingang $E_{42}$ des Komparators 4 auf den Spannungswert $U_V$ bzw. den Signaleingang $E_{41}$ auf den Referenzwert $U_R$ setzt. Anschließend wird das Testprogramm T durch einen entsprechenden Programmbefehl $T_{end}$ beendet.

Das Testprogramm T führt somit eine Prüfung der Funktionsfähigkeit der Schwellwertüberwachung 4 durch, indem hardware- oder softwaremäßige Fehler innerhalb der Steuervorrichtung 2 erkannt werden. Darüber hinaus ermöglicht das Testprogramm T auch eine detaillierte Fehlererkennung des aus dem Wandler 1 und aus der Steuervorrichtung 2 gebildeten Leistungsversorgungssystems, indem zumindest zwischen einem fehlerhaften Wandler 1 und einer fehlerhaften Schwellwertüberwachung 4 - und damit einer fehlerhaften Sicherheitseinrichtung 2 - unterschieden wird.

Diese Fehlermeldungen $FM_{1,4}$ können zudem für eine zusätzliche Schaltfunktion herangezogen werden, wonach beispielsweise bei Auftreten der einen Defekt der Schwellwertüberwachung 4 anzeigenden Fehlermeldung $FM_4$ der Wandler 1 zwangsweise abgeschaltet oder für einen einstellbaren maximalen Zeitraum im eingeschalteten Zustand gehalten wird. Die Fehlermeldungen $FM_{1,4}$ können zudem als Warnsignale angezeigt oder als Steuerkriterium für eine übergeordnete Regelung oder Steuerung herangezogen werden.

**Patentansprüche**

1. Verfahren zum Steuern eines Wandlers (1), der eine primärseitige Eingangsspannung ($U_e$) in eine sekundärseitige Ausgangsspannung ($U_a$) umwandelt, bei dem ein aus einer sekundärseitig erfassten Ist-Spannung ($U_{ist}$) abgeleiteter Spannungswert ($U_V$) mit einem Referenzwert ($U_R$) verglichen und bei Überschreiten des Referenzwertes ($U_R$) ein Steuersignal ($S_A$) als Auslösekriterium zum Abschalten des Wandlers (1) erzeugt wird, wobei während einer Prüfphase der Spannungswert ($U_V$) oder der Referenzwert ($U_R$) derart manipuliert wird, dass das Auslösekriterium erfüllt ist.

2. Verfahren nach Anspruch 1, bei dem die sekundärseitig erfasste Ist-Spannung ($U_{ist}$) und/oder ein sekundärseitig erfasster Ist-Strom ($I_{ist}$) zur Prüfung des vom Wandler (1) infolge des Auslösekriteriums eingenommenen Schaltzustandes herangezogen wird.

3. Verfahren nach Anspruch 1 oder 2, bei dem die Manipulation des Spannungswertes ($U_V$) bzw. des Referenzwertes ($U_R$) beendet wird, wenn der Wandler (1) infolge des Auslösekriteriums abgeschaltet ist.

4. Verfahren nach einem der Ansprüche 1 bis 3, bei dem ein Testsignal ($I_T$) zum Einschalten des Wandlers (1) erzeugt wird, wobei die sekundärseitig erfasste Ist-Spannung ($U_{ist}$) und/oder ein sekundärseitig erfasster Ist-Strom ($I_{ist}$) zur Prüfung des vom Wandler (1) infolge des Testsignals ($I_T$) eingenommenen Schaltzustandes herangezogen wird.

5. Verfahren nach einem der Ansprüche 1 bis 4, bei dem eine Fehlermeldung ($FM_{1,2}$) erzeugt wird, wenn der Wandler (1) während der Prüfphase einen nicht plausiblen Schaltzustand einnimmt.

6. Verfahren nach einem der Ansprüche 1 bis 5, bei dem die Ausgangsspannung ($U_a$) durch eine Spannungsregelung ($R_1$) eingestellt wird, wobei aus einer Abweichung der erfassten Ist-Spannung ($U_{ist}$) von einer vorgegebenen Soll-Spannung ($U_{soll}$) eine Stellgröße ($S_w$) für den Wandler (1) ermittelt wird.

7. Verfahren nach Anspruch 6, bei dem die Stellgröße ($S_w$) aus einer Abweichung eines sekundärseitig erfassten Ist-Stroms ($I_{ist}$) von einem von der Spannungsregelung ($R_1$) generierten Soll-Strom ($I_S$) ermittelt wird.

8. Vorrichtung zum Steuern eines Wandlers (1), der eine primärseitige Eingangsspannung ($U_e$) in eine sekundärseitige Ausgangsspannung ($U_a$) umwandelt,

- mit einem ersten Regler ($R_1$) zur Einstellung der Ausgangsspannung ($U_a$),
- mit einem Spannungsmesser (14) zur Erfassung der sekundärseitigen Ist-Spannung ($U_{ist}$),
- mit einer mit einem Steuereingang ($E_{41}$) des Wandlers (1) verbundenen Schalteinrichtung (4) zur Schwellwertüberwachung, die einen aus der Ist-Spannung ($U_{ist}$) abgeleiteten Spannungswert ($U_V$) mit einem Referenzwert ($U_R$) vergleicht und bei Überschreiten des Referenzwertes ($U_R$) ein Steuersignal ($S_A$) als Auslösekriterium zum Abschalten des Wandlers (1) erzeugt, und
- mit einem mit der Schalteinrichtung (4) verbundenen Schwellwertmanipulator (8) zum Heraufsetzen des Spannungswertes ($U_V$) oder zum Herabsetzen des Referenzwertes ($U_R$)

derart, dass das Auslösekriterium erfüllt ist.

9.  Vorrichtung nach Anspruch 8, mit einem einen ersten Reglereingang ($E_{21}$) und einen zweiten Reglereingang ($E_{22}$) aufweisenden zweiten Regler ($R_2$) zur Einstellung des sekundärseitigen Ausgangsstroms ($I_a$), wobei der erste Reglereingang ($E_{21}$) mit einem Strommesser (20) zur Erfassung des sekundärseitigen Ist-Stroms ($I_{ist}$) verbunden und dem zweiten Reglereingang ($E_{22}$) ein Steuerausgang ($A_{11}$) des ersten Reglers ($R_1$) zuschaltbar ist.

10. Vorrichtung nach Anspruch 8 oder 9, mit einem Steuermodul (10) mit einem ersten Steuereingang ($E_{102}$) für die sekundärseitig erfasste Ist-Spannung ($U_{ist}$) und mit einem zweiten Steuereingang ($E_{101}$) für einen sekundärseitig erfassten Ist-Strom ($U_{ist}$) sowie mit einem Signalausgang ($A_{101}$) und mit einem Steuerausgang ($A_{102}$), der mit einem Schaltelement (12) zum Aufschalten eines am Signalausgang ($A_{101}$) anstehenden Testsignals ($I_T$) auf einen Steuereingang ($E_{31}$) des Wandlers (1) verbunden ist.

Fig. 1

EP 1 134 866 A1

$T_{start}$

$T_0$

$U_{ist} < U_{max}$ — n

j

$T_{12}$ — $I_T \rightarrow R_2$

$T_{22}$

$I_T \rightarrow R_2$

$T_{13}$

FM$_1$ — n

$I_{ist} > 0$
$U_{ist} > 0$

$T_{23}$

$I_{ist} = 0$
$U_{ist} = 0$ — n — FM$_4$

j

j

$T_{14}$ — $U_V > U_R$

$T_{15}$

FM$_4$ — n

$U_{ist} = 0$
$I_{ist} = 0$

j

$T_{16}$ — $U'_V = U_V$
$U'_R = U_R$

Fig. 2

$T_{end}$

9

Europäisches
Patentamt

## EUROPÄISCHER RECHERCHENBERICHT

Nummer der Anmeldung

EP 00 10 5745

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 40 09 483 C (LICENTIA PATENT-VERWALTUNGS-GMBH) 10. Oktober 1991 (1991-10-10) * Zusammenfassung * --- | 1-10 | H02H7/00 H02M1/00 |
| D,A | DE 43 10 240 A (NISSAN MOTOR) 7. Oktober 1993 (1993-10-07) * das ganze Dokument * --- | 1-10 | |
| A | US 4 475 150 A (D ATRE JOHN D ET AL) 2. Oktober 1984 (1984-10-02) * Zusammenfassung * --- | 1-10 | |
| A | DE 195 03 180 A (MITSUBISHI ELECTRIC CORP) 10. August 1995 (1995-08-10) * Zusammenfassung * ----- | 1-10 | |

**RECHERCHIERTE SACHGEBIETE (Int.Cl.7)**

H02H
H02M

Der vorliegende Recherchenbericht wurde für alle Patentansprüche erstellt

| Recherchenort | Abschlußdatum der Recherche | Prüfer |
|---|---|---|
| DEN HAAG | 15. August 2000 | Lampe, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 00 10 5745

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-08-2000

| Im Recherchenbericht angeführtes Patentdokument | Datum der Veröffentlichung | Mitglied(er) der Patentfamilie | Datum der Veröffentlichung |
|---|---|---|---|
| DE 4009483 C | 10-10-1991 | KEINE | |
| DE 4310240 A | 07-10-1993 | JP 3039119 B<br>JP 5278535 A<br>US 5334926 A | 08-05-2000<br>26-10-1993<br>02-08-1994 |
| US 4475150 A | 02-10-1984 | CA 1194929 A<br>JP 58224575 A | 08-10-1985<br>26-12-1983 |
| DE 19503180 A | 10-08-1995 | JP 7227086 A<br>CN 1118878 A,B | 22-08-1995<br>20-03-1996 |

EPO FORM P0461

Für nähere Einzelheiten zu diesem Anhang : siehe Amtsblatt des Europäischen Patentamts, Nr.12/82